# EUROPEAN PATENT APPLICATION

(11) **EP 1 113 291 A1**
(43) Date of publication of application: **04.07.2001**
(21) Application number: 99923803.3
(22) Date of filing: 16.06.1999
(51) Int. Cl.: G01T 1/20

(54) **DIGITAL RADIATION IMAGE UNIT**

(30) Priority: 15.07.1998 JP 23343298
(71) Applicant: Kuroda, Keiichi, 74160 Neydens (FR)
(72) Inventor: Kuroda, Keiichi, 74160 Neydens (FR)
(74) Representative: Bibby, William Mark
(86) International application number: IB9901118
(87) International publication number: WO0004403

(57) **Abstract**

A radiation imager utilizing leading-edge technology of high density photosensitive elements and wavelength shifting fibers in combination to realize a high detection efficiency and a high position resolution, the imager being able to have a sufficiently wide photosensitive area, if any. On a flat plate- shaped scintillator having a characteristic that scintillation light caused by radiation is localized two-dimensionally, are optically glued a plurality of parallelly arranged wavelength shifting fiber layers such that the fiber layers are in parallel with a radiation incident surface of the scintillator and fibers belonging to different layers cross each other at a given angle, wherein the scintillation light caused by the radiation is converted into secondary light within said wavelength shifting fibers and the secondary light is transmitted to photosensitive elements corresponding to respective positions of the fibers to detect an incident position. An incident position of the radiation is detected by a synchronous measurement of signals derived from photosensitive elements belonging to at least two fiber layers.

## Description

### Technical Field

The present invention relates to a radiation imager for use in an image formation of gamma-rays, hard X-rays, beta-rays and neutrons by utilizing high density photosensitive elements, for instance a position-sensitive photomultiplier in combination with wavelength shifting fibers to have a high detection efficiency and a high space resolution.

### Technical Background

The radiation imaging technology has been widely spread in scientific and industrial backgrounds not only in the field of nuclear medicine such as gamma camera and positron CT, but also in various fields such as synchrotron radiation experiments, genome analysis, z chromatography, biotechnology, neutron diffraction experiment and non-destructive inspection by X-ray CT.

Position-sensitive photomultipliers used in recent radiation imagers may be roughly divided into two types depending on the magnitude of cross talk between channels, one a week cross talk type and the other a strong cross talk type.

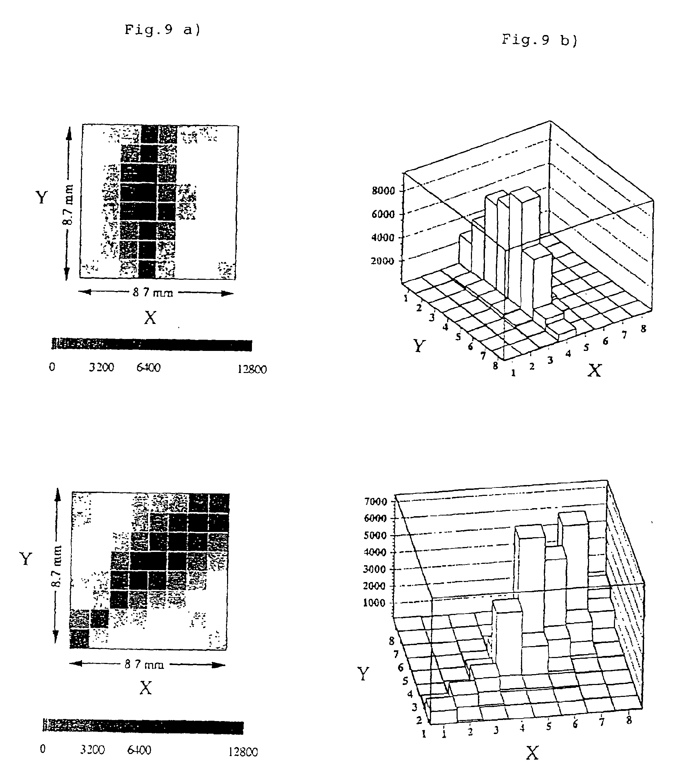

A typical application of the position-sensitive photomultiplier is shown in Fig. 9. Fig. 9a is a schematic view illustrating a detector for measuring an excellent time characteristic of the scintillating fibers (rise time is shorter than 1 ns), and therefore this detector are noticed to have high performance both in time and space resolutions. This system has been also utilized in a beta-ray imager (refer to M. Leblanc et al., "SOFI: A Scintillating Optical Fiber Imager", Nuc. Instr. and Methods A273 (1988) 581, and M. Morimoto and F. Tokanai ; "Beta-Ray Imaging using Scintillating fibers", RIKEN Accel. Prog. Report 31 (1998)), but due to multiple scattering of low energy electrons inside X-plane of fiber arrays (incident plane) position resolution on Y-plane might be extremely spoiled. For instance, when 2 layers of fibers having a diameter of 1 mm φ are stacked one on the other, although the resolution in X direction is 1 mm, the resolution in Y direction becomes worse such as 3 mm. In order to reduce influence of multiple scattering, the diameter of fibers in the incident side may be reduced. But in this case, the detection efficiency might be decreased.

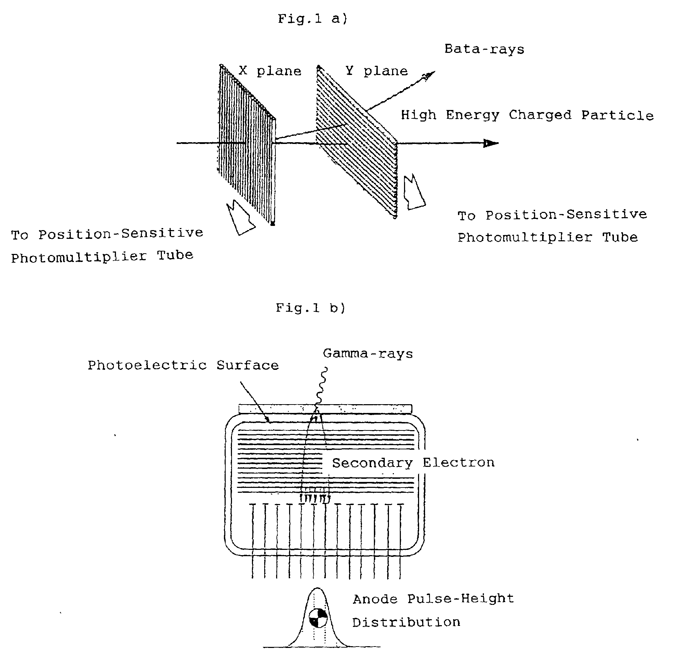

When a detection is performed by conversion of neutral radiations into charged particles such as detection of gamma-rays and neutrons, incident position X, Y may be determined by a suitable scintillator directly mounted on the photocathode surface of a strong cross talk type photo multiplier. Fig. 1b is a schematic view depicting a gamma camera which has been manufactured by Parmentier of Franc Contois University together with Hamamatsu Photonics Company (refer to M. Parmentier, "IRIS: Imageur Radioisotopique Develope dans le cadre du GBM Franc Contois, INFO Photonics, Hamamatsu France No. 16-96, Vol. 2). In principle, this gamma camera belongs to the type currently known as Angercamera, in which position of incident gamma-rays is determined by deriving a light distribution from adjacent channels, i.e. a center of gravity of pulse-height distribution of anode signals. Upon compared with current imagers, the light receiving area is large relative to the surface area of scintillator and the number of channels which contribute to the calculation of the center of gravity is larger. Therefore, a very good position resolution up to about 1.2 mm (full-width at half-maximum) could be attained. However, for image reconstruction, image distortion due to the pulse-height distribution, i.e. analog quantity must be corrected. At present, an effective aperture is planned to be increased from 10 cm φ to 20 cm φ. However, there are several problems to be solved for manufacturing a position-sensitive photomultiplier tube with a large aperture.

The inventor of the present application conducted, at Laue-Langevin Institute in Grenoble, France, in the age of 1980, a measurement of thermal neutron diffraction image by a similar analog method. In this measurement, an epoch making position resolution of 110 µm could be obtained by using a scintillator of ZnS(Ag)+⁶Li. However, since this analog method requires a large amount of light, the thickness of the opaque ZnS(Ag) scintillator could not be increased, and the detection efficiency higher than about 11 % could not be attained.

Problems of the above explained prior arts may be summarized as follows:
(1) In the imagers using the scintillating fibers, position resolution in X and Y directions might become extremely unbalanced for low energy charged particles such as beta-rays due to multiple scattering within incident side fibers.
(2) In the Anger type camera, position resolution depends on the amount of light emitted from the scintillator, and the sensitive surface area is limited in view of the manufacture of the position-sensitive photomultiplier tube.
(3) In the above two cases, the position resolution and detection efficiency are related respectively to conflicting conditions, so that these two properties can not be improved simultaneously.

### 3.[Disclosure of the Invention]

The present invention has for its object to provide a radiation imager having high detection efficiency, a high position resolution and a large photosensitive surface area with a combination of a high density photosensitive element, e.g. position-sensitive photomultiplier, and light wavelength shifting fibers, both used in a leading-edge technology in the High Energy Physics experiments.

In the imager according to the present invention, the inventors do not attach so much importance to analog information which is considered to be essential mainly in many known radiation detectors, but take into account of digital information. In the present specification, the term "digital" is used to express a detection of incident radiation by means of single photoelectrons. Such detection could be realized by recently developed high-density photosensitive elements, typically position-sensitive photomultiplier which can detect a single photoelectron surely and sharply.

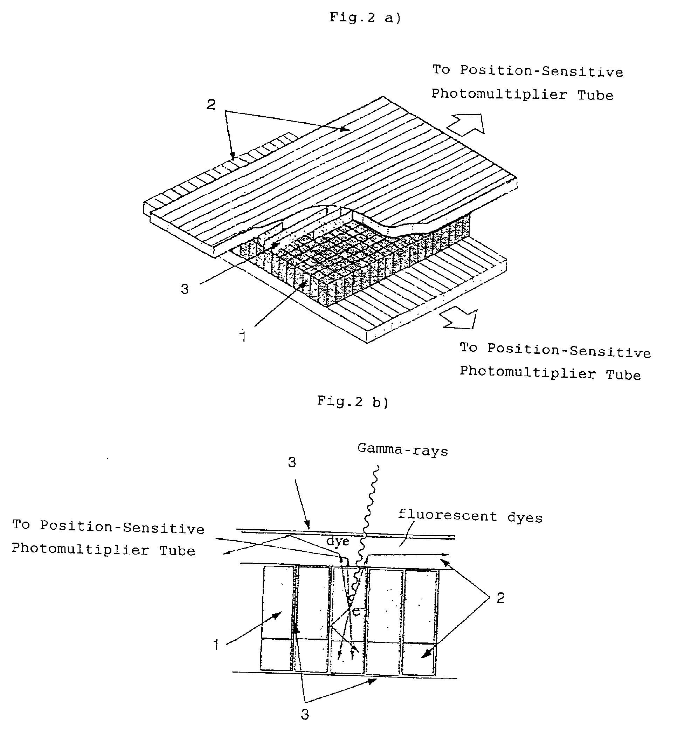

Fig. 2a illustrates a typical structure of the sensitive part of the imager according to the invention. On upper and lower surfaces of a scintillator 1 divided in a mosaic fashion are glued wavelength shifting fibers 2 by optical epoxy, said fibers being aligned along columns and rows of scintillator elements. Between respective columns and rows of the scintillator elements, there are arranged reflector foils (for instance aluminized Mylar film) 3 so as to suppress optical cross talk between adjacent pixels as much as possible. One ends of respective wavelength shifting fibers are optically coupled with a photocathode surface of independent channels of a high density photosensitive element, for instance a position-sensitive photomultiplier.

Fig. 2b illustrates the function of the imager constructed in the manner explained above. For instance, gamma-rays impinging upon the scintillator elements 1 are converted into photoelectrons to generate scintillation light. This primary light excites fluoroscent elements (dye) in the wavelength shifting fiber 2 to generate secondary light having a longer wavelength than the primary light. The secondary light is reflected by inner walls of the fibers and is transmitted to the photocathode surface of the photomultiplier as a light signal. A conversion efficiency of the primary light by the fluorescent dyes is sufficiently high (for instance, about 90 % per one milli meter travel), if the wavelength of the primary light is matched to the absorption wavelength of the fluorescent dyes. Therefore, it is possible to attain a large amount of light which is comparable to that obtained by the scintillating fibers in which the above two processes are conducted within the same medium.

Merits of the present invention may be summarized as follows:
(1) By suitably selecting the scintillator, the imager according to the invention may be applied not only to gamma-rays, but also to hard X-rays, beta-rays and neutrons.
(2) Since a light absorption coefficient within the wavelength shifting fiber is low (about 1/e per 3-4 meters propagation), it is possible to realize the imager having any desired size up to an extremely large size (for instance 2m×2m).
(3) By reducing a pixel size, it is possible to attain a very high position resolution.
(4) Since the pixel positions are determined geometrically, correction for image distortion is not required.
(5) Since an incident position is projected in X and Y directions, a larger number of pixels (n²) can be obtained with a smaller number of photosensitive elements (2n).
(6) Since the signals in both X and Y planes are measured in coincidence, lower noise is realized.
(7) Since fibers 2 in the X and Y directions corresponding to an incident position are coupled with a same primary light source on the scintillator layer 1, uniform position resolutions can be obtained in respective directions.
(8) Since a small amount of light corresponding to a few photoelectrons is required for the detection of incident radiation condition for the transparency of the scintillator is greatly released, so that a new scintillator for hard X-rays having an improved time characteristic as well as a high detection efficiency can be realized by a novel composition.
(9) The fact that the detector is flat and has no additive members could be a great advantage for special applications.

The typical structure shown in Fig. la may be modified in accordance with respective applications without loosing the above mentioned merits (1)-(9).

Fig. 2a shows a structure of a second embodiment and Fig. 2b illustrates its function. In this second embodiment, the scintillator layer 1 is not divided and the reflector foils 3 are not provided within the scintillator layer 1. When use is made of a scintillator layer 1 whose medium is opaque for light emitted by the scintillator (for instance powder scintillator), the light is localized within the scintillator without providing the partitions between elements. Therefore, by arranging the wavelength shifting fiber layers 2 within the attenuation length λₐ of the light signal, it is possible to derive position information of the radiation.

The inventor of the present application has confirmed the possibility above mentioned by irradiating alpha rays from ²⁴¹Am to ZnS(Ag) scintillator layer 1. For instance, when the wavelength shifting fibers are arranged to be distant from light source produced by incident particles by 0.3 mm and 0.5 mm, it has been found that the distribution of light signal on the fibers 2 is localized with a full-width at half-maximum(FWHM) of 0.51 mm and 0.59 mm, respectively. This fact indicates that ZnS(Ag)+⁶Li scintillator layer 1 may be used without being divided into a mosaic for the position detection of thermal neutrons. This is particularly important for the application of the neutron imager according to the invention.

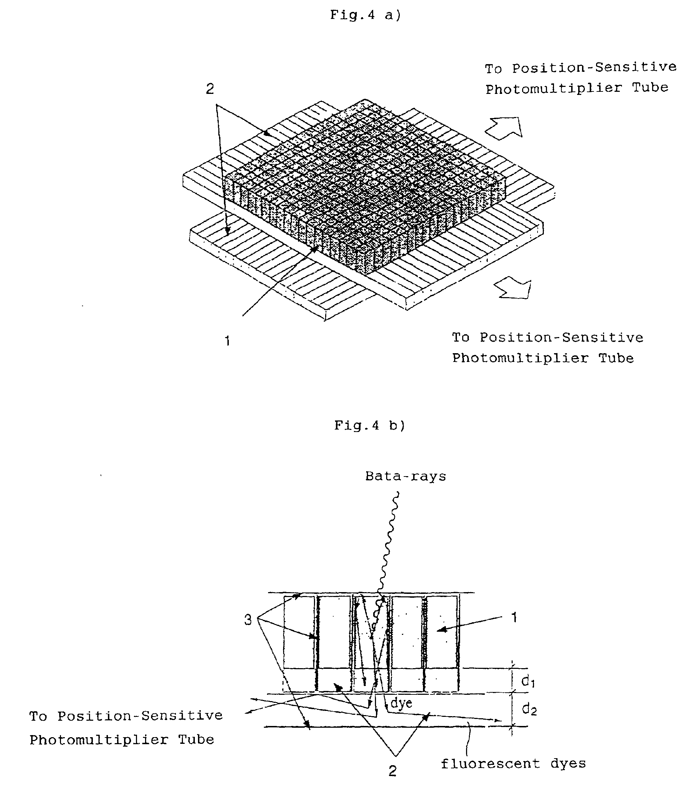

A major problem of the position detection for beta-rays is that position resolution for beta-rays is spoiled by multiple scattering of beta-rays within input side wavelength shifting fibers. As depicted in Fig. 4, when fiber layers are arranged only on one side of the scintillator such that the radiation falls directly upon the scintillator, this problem can be almost solved. In this case, strength of the secondary light from the different fiber layers may be balanced by adjusting thickness of the fiber layers through which the primary light passes or the concentration of fluorescent dyes contained in the fibers.

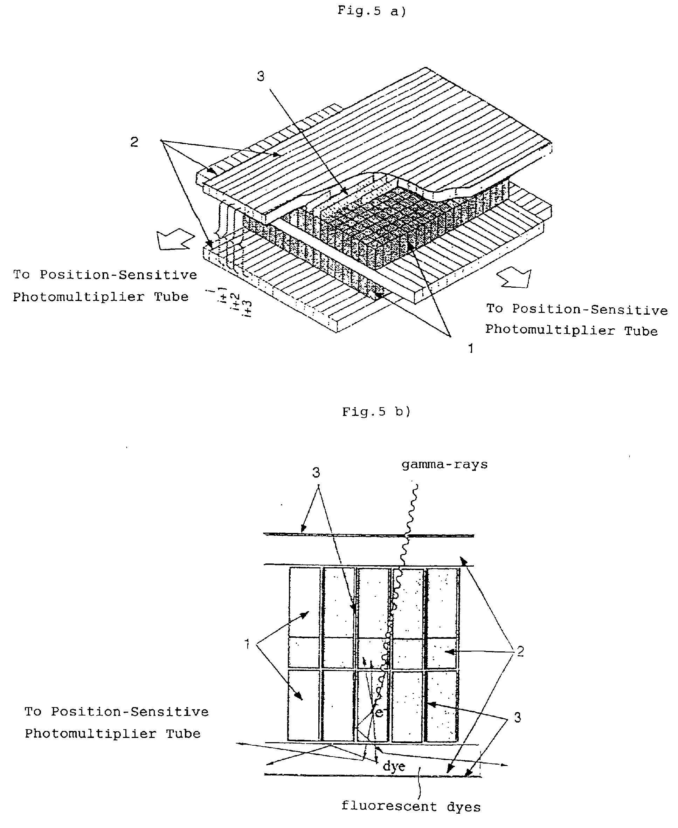

When the medium of a scintillator to be used is opaque for light emitted by the scintillator, there is a drawback that a high detection efficiency could not be obtained due to a limit of the thickness of scintillator as discussed above with reference to the prior art technique. As illustrated in Fig. 5, by arranging scintillators and fiber layers alternately viewed in the incident direction of radiation, it is possible to increase the detection efficiency for neutral radiations such as gamma-rays and neutrons. In this case, by grouping fibers of the different fiber layers at corresponding positions, the number of necessary photosensitive elements is not increased.

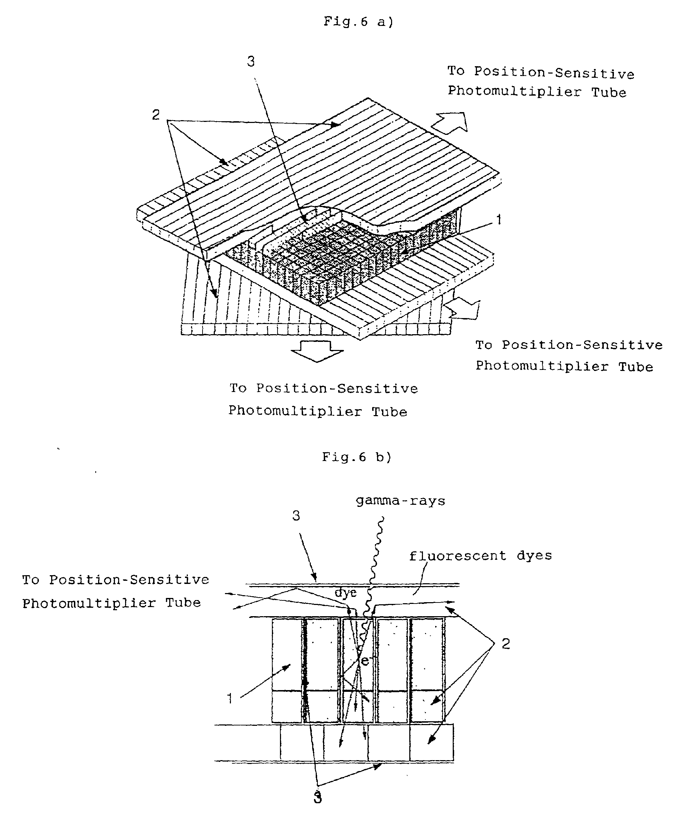

In a special application of the imager, a plurality of incident radiation rays are simultaneously detected. As shown in Fig. 6, a third wavelength shifting fiber layer aligned at a given angle with respect to the X and Y directions is optically coupled with the X layer or Y layer. In this manner, a confusion in combination of respective coordinates obtained in the X and Y layers is avoided.

As explained above, the imager based on the present invention may be modified in various ways in accordance with the applications, and this is one of special features of the invention.

### 4.[Brief Description of the Drawings]

Fig. 1a shows a schematic diagram of a recent radiation imager in which scintillating fibers are combined with a position-sensitive photomultipliers.

Fig. 1b illustrates a typical conventional radiation imager constituting a gamma camera using a position-sensitive photomultiplier.

Figs. 2a and 2b show a structure of a sensitive area constituting a major part of a typical digital radiation-imager according to the invention, and its performance.
1---scintillator, 2---wavelength shifting fiber, 3---reflector foil

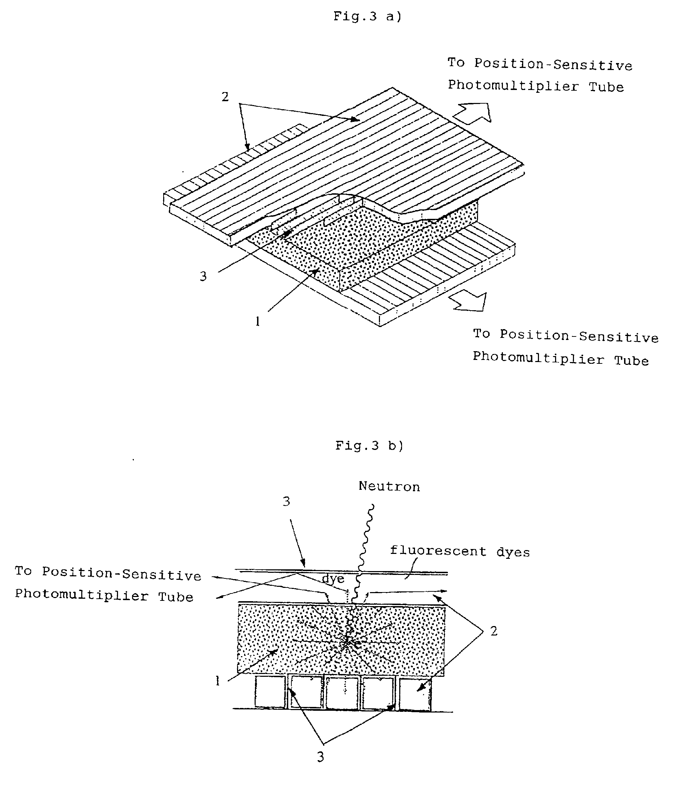

Figs. 3A and 3B depict a structure of a sensitive area consisting of an opaque scintillator of an alternative embodiment of the digital radiation imager according to the invention, and its performance.
1---scintillator, 2---wavelength shifting fiber, 3---reflector foil

Figs. 4A and 4B illustrate a structure of a sensitive area of another embodiment of the digital radiation imager according to the invention and its performance, in said sensitive area, all fiber layers being arranged on a downstream side viewed along incident direction of radiation in order to avoid disturbance on hit position of low energy charged particles (for instance beta rays) by multiple scattering within wavelength shifting fibers.
1---scintillator, 2---wavelength shifting fiber, 3---reflector foil

Figs. 5a and 5b show a structure of another embodiment of the digital radiation imager according to the invention and its performance, in which scintillators and fiber layers are stacked alternately viewed in an incident direction of radiation in order to increase the detection efficiency for neutral particles.
1---scintillator, 2---wavelength shifting fiber, 3---reflector foil

Figs. 6a and 6b illustrate a structure of a sensitive area of another embodiment of the digital radiation imager according to the invention and its function, in which in addition to two fiber layers for setting two coordinates of incident positions, a third fiber layer is arranged inclined with respect to the said coordinate axes in order to detect simultaneously plural number of radiation rays.
1---scintillator, 2---wavelength shifting fiber, 3---reflector foil

Fig. 7a shows an experimental result confirmed by an embodiment of the present invention, in which the detection efficiency for gamma rays of the imager according to the invention is denoted as a function of an input pulse width Wt to a coincidence circuit defining incident radiations.

Fig. 7b is a graph showing a coincidence curve measured by changing relative time (Δt) of signals supplied from X and Y planes to said coincidence circuit.

Fig. 8a shows an event distribution in X and Y directions obtained for gamma-rays radiated from ⁹⁰Co and collimated by a slit.

Fig. 8b represents event distribution in X and Y directions obtained for beta-rays radiated from ⁹⁰Sr and collimated by a slit.

Fig. 9a illustrates a two-dimensional image and its event distribution obtained for gamma rays radiated from ⁵⁷Co and collimated by a slit arranged in the Y direction.

Fig. 9b shows a two-dimensional image and its event distribution obtained for gamma rays radiated from ⁵⁷Co and collimated by a slit inclined by 45 degrees with respect to the X direction.

### 5.[Best Mode of the Invention]

In order to verify the possibility of realizing the radiation imager according to the invention, the inventor constructed a concept model including 8×8 elements made of CsI(Na) crystal, and its basic data were derived. Pixels have a size of 1×1×2.5(height) mm³ and are aligned with a gap of 0.1 mm. As wavelength shifting fibers, Y11(200) having a diameter of 1 mmφ, manufactured by Kuraray Company are used.

Recorded events are selected by the coincidence of signals from the X and Y planes. Since the decay time of scintillation light from CsI(Na) is long (generally 650 ns) and the number of photoelectrons per even is very small (about four), the time at which the first photoelectron belonging to the same event is detected fluctuates very much. Therefore, pulse width (Wt) of signals supplied from the X and Y planes to the coincidence circuit has to be sufficiently long.

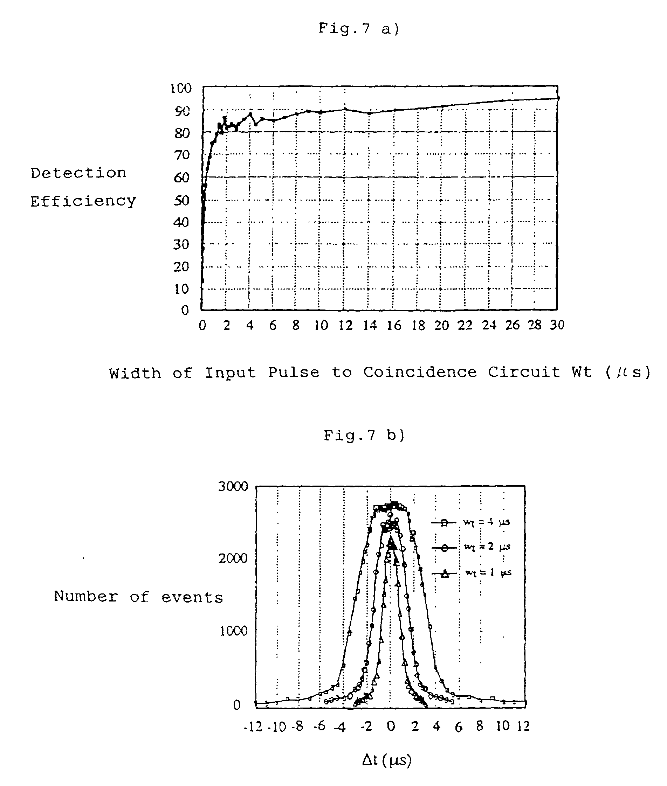

Fig. 7a is a graph showing the detection efficiency for gamma rays (122 keV) from ⁵⁷Co as a function of Wt. In order to suppress noise due to accidental coincidence measurement, it should be noted that it is possible to attain the detection efficiency more than 80 % even when Wt is reduced down to 2 µs. Fig. 7b shows coincidence curves when Wt is set to 1, 2 and 4 µs. The fact that a clear peak appears at Δt=0 in any cases is important to show that "gamma-rays are detected without ambiguity" by the present concept model.

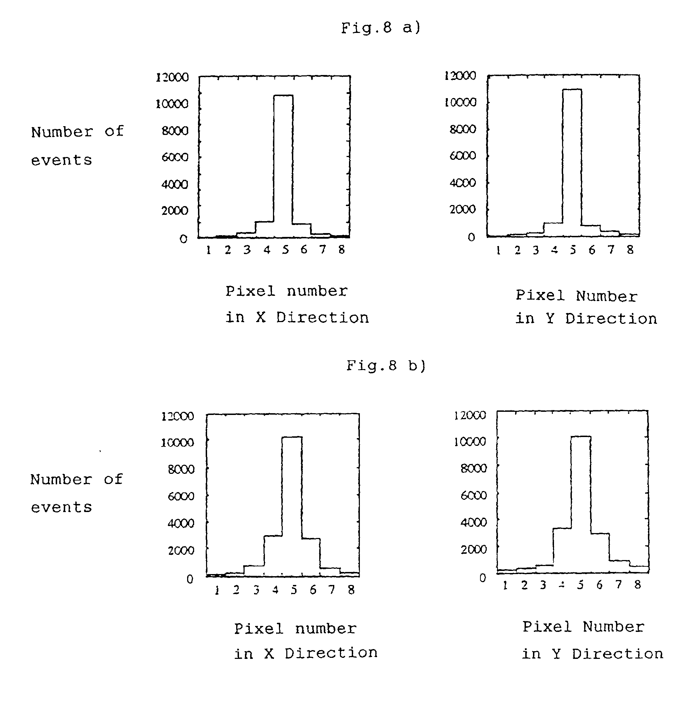

In order to predict the position resolution, a slit (made of lead) having a width of 0.5 mm is arranged in parallel with the wavelength shifting fibers in the X direction or Y direction, and event distributions were measured. Fig. 8a shows a result obtained for gamma-rays from ⁵⁷Co, and Fig. 8b depicts a result obtained for beta-rays from ⁹⁰Sr. By fitting these distributions by a Gaussian distribution, position resolution for gamma-rays is about 1.2 mm both in the X and Y directions, and position resolution for beta-rays is about 1.6 mm in the X direction and about 1.7 mm in the Y direction. A reason that the position resolution in the Y direction is slightly lower than that in the X direction would be multiple scattering of beta-rays within the wavelength shifting fibers. These results are comparable or superior to the best performance of the known imagers, and particularly the fact that the resolutions in the X and Y directions for beta-rays are substantially equal to each other should be notified as a remarkable merit of the imager according to the invention. The present concept model has a small number of pixels of only 64, but the performance as a two-dimensional imager has been already attained. As an example, a two-dimensional image and its event distribution obtained for the above mentioned gamma-rays are shown in Figs. 9a and 9b, respectively. Background noise is flat and sufficiently low, and its counting rate was about 0.05 counts/pixel·second.

As can be understood by the above explained basic data, the imager according to the present invention has a sufficient performance for a medical gamma camera, but in order to apply the imager to image measurement of hard X-rays in the field of synchrotron radiation experiments and so on, several problems have to be solved. For instance, the detection efficiency of the imager according to the invention is defined by the Poisson distribution, and is given by a square of (1-e^{-µ}), i.e. the square of "the probability of generating at least one photoelectron" (due to coincidence measurement of two planes), wherein µ is an average number of photoelectrons generated in one event. Since µ is proportional to energy of incident gamma rays, it is difficult to attain a high detection efficiency for lower energy. According to the above basic data, µ may be assumed to be about four at 122 keV, but at 10 keV µ becomes about 0.4 and the detection efficiency decreases down to by about 10 %. However, the inventor learned that the manufacture of a GaAs (Gallium Arsenic) photocathode which was expected since a long time has recently been realized by Hamamatsu Phoptonics. If this photocathode is used in the position-sensitive photomultiplier, it is expected that µ increases about twice. Furthermore, by improving the scintillator and wavelength shifting fibers, the number of photoelectrons per event could be increased by about three times.

### 6. [Industrial Applicability]

The radiation imager according to the invention can be applied to wide fields of science and industry. Now the important merits of the present invention will be explained by reciting typical applications thereof.
(1) The imager according to the invention has a higher position resolution than the current gamma camera by about three times, and therefore the image obtained by the imager of the invention has an extremely high sharpness. This provides a possibility of a very early and positive diagnosis of thyroid gland, breast cancer, liver configuration, examination of for surgical tissues and so on. Particularly, the imager of a middle size aperture (for instance diameter of 20 cm) having a high position resolution is very useful in the field of inspection of brain function in combination with a recently newly developed tracer. Moreover, as discussed in the above merit (5), the imager according to the invention is economical, and thus may be installed in many bio-laboratories and will promote development of new medicines through animal experiments using tracers.
(2) In order to apply the present invention to the synchrotron radiation experiments, the detection efficiency for a low energy region has to be increased. In current X-ray imagers based on a gas detector (multi-wire chamber), the detection efficiency is abruptly decreased in accordance with an increase in energy of gamma rays. Therefore, the imager according to the present invention is expected to cover a high energy region (20-100 keV) which has been realized first in the world by the large scale synchrotron radiation facility realized in Japan (Spring-8).
(3) The imager according to the invention can be applied, as a beta ray imager, to wide fields such as genome analysis, chromatography and biotechnology. As explained in connection with the basic data, the resolution is decreased by multiple scattering inside the wavelength shifting fibers, but may be improved by reducing the thickness of the fibers. In order to keep a high conversion efficiency of the primary light, it is necessary to increase the concentration of fluorescent dyes inside fibers. Nowadays, Y11(400) fibers having a higher density than ordinary fibers by two times are available. By using such fibers, the position resolution may be improved to be not larger than 1 mm both in the X and Y directions.
(4) For the image measurement of thermal neutrons, the conventional scintillators use ZnS(Ag) doped with ⁶Li. Since this medium is opaque, its thickness is limited to be less than 0.5 mm, and therefore a high detection efficiency could not be attained. Charged particles generated by the exothermic reaction of n+⁶Li→α+t have high energy such as 4.79 MeV. As stated above in the merit (8), the imager according to the present invention has a sufficient margin for an amount of light, and thus the detection efficiency may be improved by increasing the thickness of the scintillator. As explained above with reference to the alternative embodiment (Fig. 5), the detection efficiency can be also increased by alternately stacking the scintillators and fiber layers along the incident direction of neutrons.
(5) The application to the gamma-ray CT is important for the non-destructive inspection of buildings, traffic means, large scale machines and so on. As pointed out in the above merit (9), by using the fiber detector, the photosensitive part can be extremely flat (depending upon energy of gamma rays, for example not larger than 1 cm in a several hundreds keV region). This merit should be appreciated as an inherent merit in this field just like as the liquid crystal screen with respect to the Braun tube. Although the gamma-ray source is much simpler, the measurement by gamma-rays has not been widely used in non-destructive tests, because the measurement speed is low due to divergence of gamma-rays. When the imager having a large number of pixels according to the invention is utilized, the measurement time may be shortened very much, and an easily potable apparatus may be realized in conjunction with its merit in configuration.

As explained above, the digital radiation imager according to the invention will bring important advantages intimately related to the development of the public welfare, science and industry in very wide application fields of radiation technique.

## Claims

1. A radiation imager characterized in that on a flat plate-shaped scintillator having a characteristic that scintillation light caused by radiation is localized two-dimensionally, are optically glued a plurality of parallelly arranged wavelength shifting fiber layers such that the fiber layers are in parallel with a radiation incident surface of the scintillator and fibers belonging to different layers cross each other at a given angle, wherein the scintillation light caused by the radiation is converted into secondary light within said wavelength shifting fibers and the secondary light is transmitted to photosensitive elements corresponding to respective positions of the fibers to detect an incident position.

2. A radiation imager according to claim 1, wherein for a single radiation event, at least one photoelectron is generated in a photosensitive element belonging to at least two different fiber layers to detect an incident ray.

3. A radiation imager according to claim 1, wherein said flat plate-shaped scintillator has a structure in which column like elements optically separated from each other are aligned in a mosaic manner, and wavelength shifting fiber layers are arranged on upper and lower surfaces of said scintillator such that wavelength shifting fibers are aligned along columns and rows of the elements and optically in contact with the elements.

4. A radiation imager according to claim 1, wherein said scintillator has an opaque medium such as a powder so that light is localized within the scintillator without providing a partition between adjacent pixels, and information about incident position of the radiation is derived by the wavelength shifting fiber layers arranged within an attenuation length of the light signal.

5. A radiation imager according to claim 1, wherein said plurality of wavelength shifting fiber layers are arranged on a downstream side of the scintillator viewed in an incident direction of the radiation so that scattering of the radiation prior to the incident upon the scintillator is avoided.

6. A radiation imager according to claim 1, wherein imager further comprises a means for effecting uniformity of a strength of the secondary light emitted from different fiber layers by adjusting a thickness of the fiber layers through which primary light traverses or by adjusting a concentration of fluorescent dyes contained in the fibers.

7. A radiation imager including a plurality of the structure as claimed in claim 1, said plurality of structure are stacked in an incident direction of the radiation, and fibers at corresponding positions in a plurality of fiber layers aligned in a same direction are optically coupled with a photosensitive element to increase the detection efficiency for neutral radiation such as gamma-rays and neutrons.

8. A radiation imager according to claim 1, wherein at least three fiber layers are arranged such that fibers belonging to different fiber layers cross each other at a given angle to detect positions of multiple radiation rays which are made incident simultaneously.
